# EUROPEAN PATENT APPLICATION

(11) **EP 2 060 904 A1**
(43) Date of publication of application: **20.05.2009**
(21) Application number: 07301545.5
(22) Date of filing: 13.11.2007
(51) Int. Cl.: G01N 21/55

(54) **Plasmon grating biosensor**

(71) Applicant: Koninklijke Philips Electronics N.V., 5621 BA Eindhoven (NL)
(72) Inventor: De Boer, Ruth, W. I., 75008 Paris (FR); Klunder, Derk, J. W., 75008 Paris (FR); Gomez Rivas, Jamie, 75008 Paris (FR); Van Dijk, Erik, 75008 Paris (FR)
(74) Representative: van Oudheusden-Perset, Laure E.

(57) **Abstract**

The present invention discloses a novel concept for real-time, high-sensitivity optical biosensing that is suitable for cheap and simple incorporation in existing standard microscopes, and other similar apparatuses. Moreover, the present invention proposes to use surface plasmon polaritons (SPPs) on gold structured surfaces to localize the excitation and/or detection volume in an optical biosensor to a range <500 nm above the substrate surface. According to some embodiments the excitation and detection are performed on the substrate side, and the structure of the metal film is designed such that the excitation and the emission light path travel nearly perpendicular to the metal film.

## Description

### Field of the Invention

This invention pertains in general to the field of biosensors. More particularly the invention relates to a Plasmon grating biosensor.

### Background of the Invention

The present invention notably relates to the challenges of detecting low concentrations of a biological component, also referred to as target, in a liquid analyte mixture.

Currently, this may be accomplished by selectively capturing the target with a binding composition, which is attached to a solid surface. Whether or not binding has occurred is detected by measuring the presence of a label that has either previously been attached to the target, or is linked to a second binding composition that binds to the captured target. Often the label is fluorescent such that detection is achieved by optical means, however also another type of detection, such as chemiluminescent or magnetic, is possible.

Two main factors determine the minimum target concentration that may be detected. The first factor is the detection sensitivity of the label. The more sensitive the detection is, the lower the amount of bound labels that is needed before a positive identification may take place. The second factor is the presence of background signals, in particular in the form of unbound labels.

Surface Plasma Polaritons (SPPs), also known as surface plasmons, are electromagnetic surfaces waves that propagate parallel along an interface between a metal and dielectric. Since the wave is on the boundary of the metal and the external medium (air or water for example), these oscillations are very sensitive to any change of this boundary, such as the adsorption of molecules to the metal surface. The surface plasmons result in a strong enhancement of the optical field close to the metal surface. This field enhancement effect is of interest for a large number of optical phenomena.

The excitation of surface plasmons by light is denoted as a surface plasmon resonance (SPR) for planar surfaces or localized surface plasmon resonance (LSPR) for nanometer-sized metallic structures. This phenomenon is the basis of many standard tools for measuring adsorption of material onto planar metal (typically gold and silver) surfaces or onto the surface of metal nanoparticles. It is behind many color based biosensor applications and different lab-on-a-chip sensors.

In order to excite surface plasmons in a resonant manner, one can use an electron or light beam (visible and infrared are typical). The incoming beam has to match its impulse to that of the plasmon. In the case of p-polarized light, this is possible by passing the light through a prism-shaped or hemispherical block of glass to increase the wave number (and the impulse), and achieve the resonance at a given wavelength and angle. WO2005/003743 discloses an invention based on such a system. This document discloses a design for a surface plasmon resonance biosensor with fluorescence labelling, in which both the excitation and the detection of fluorescence are performed through a metal film. More precisely, the light source and the detector are positioned on the substrate side of the sample, whereas the biological sample is on the other side of the metal.

This configuration of the detector and the source with respect to the substrate is very interesting.

In particular, an advantage of such a configuration is that the excitation and the fluorescence emission light do not have to pass through the biological sample: a highly scattering and absorbing biological sample, like blood, may result in considerable loss of light; moreover, it may cause considerable background fluorescence, due to excitation of fluorescent labels/molecules that are floating in the biological liquid and that are not specifically bound to the functionalized metal surface.

However, the system proposed in WO2005/003743 (see Fig. 1a) is not suited for being implemented in commonly known apparatuses, such as standard microscopes, notably due to the fact that, in said configuration, the excitation and emission light make a large angle between 62 and 90 degrees (i.e. almost horizontal) with respect to the metal film normal. As a consequence, to be able to detect the fluorescence e.g. with a detector via an objective, the numerical aperture NA (NA = n sinθ where θ is the half-angle of the maximum cone of light that can enter/exit the lens and n is the refractive index of the medium) of the objective must be close to 1 or above. However, this solution is expensive and area consuming.

Another solution may consist in deviating the excitation and emission lights towards the objective, by means of any cheap optical components known in the art, such as mirrors, prisms. However, here again the system may become complex and area consuming.

Hence, an improved electromagnetic inelastic scattering sensor, microscope, and use allowing for increased flexibility, and cost-effectiveness would be advantageous.

### Summary of the Invention

Accordingly, the present invention preferably seeks to mitigate, alleviate or eliminate one or more of the above-identified deficiencies in the art and disadvantages singly or in any combination and solves at least the above mentioned problems by providing an electromagnetic inelastic scattering sensor, microscope, and use according to the appended patent claims.

According to one aspect of the invention, an electromagnetic inelastic scattering sensor based on surface plasmon-coupled emission is provided. The sensor comprises a conductive layer positioned on a substrate, said conductive layer having a surface which faces away from said substrate and which is functionalized for binding luminescent or Raman active particles, a light source provided on the substrate side of the sensor and configured to cause excitation of the luminescent or Raman active particles via an excitation light, wherein at least a part of the energy of the excited luminescent or Raman active particles is transferred into a plasmon mode of said surface, resulting in emitting electromagnetic inelastic scattering light from said plasmon mode into said substrate, a detector configured to detect said electromagnetic inelastic scattering light from the substrate side of the sensor. Moreover, the conductive layer comprises a grating being designed to control the propagation angle of both said excitation light and said electromagnetic inelastic scattering light, such that said angles are smaller than the numerical aperture of one objective being arranged substantially perpendicular to said functionalized surface.

According to another aspect a microscope comprising the sensor is provided.

According to another aspect of the invention a use of the sensor, in real-time, high-sensitivity optical biosensing, is provided.

According to another aspect of the invention a use of the sensor, in in-vitro-diagnostics, air quality, or food safety, is provided.

According to another aspect of the invention a use of the sensor in qPCR or DNA hybridization detection, is provided.

According to some embodiments the excitation and detection are performed on the substrate side, and the structure of the metal film is designed such that the excitation and the emission light path travel nearly perpendicular to the metal film. As such, the excitation and the fluorescence emission may propagate via one objective that is oriented perpendicular to the substrate surface.

The present invention according to some embodiments allows for incorporation of surface plasmon sensing in an apparatus that is suitable as well for other types of measurements.

According to some embodiments, an apparatus is provided allowing for nearly perpendicular illumination and detection with respect to the substrate surface. Accordingly, the optical path direction, enabled by the apparatus will be compatible with any standard microscope.

### Brief Description of the Drawings

These and other aspects, features and advantages of which the invention is capable of will be apparent and elucidated from the following description of embodiments of the present invention, reference being made to the accompanying drawings, in which
Fig.1a is an illustration showing a commonly known SPR system;
Fig.1b is an illustration showing a commonly known SPR system;
Fig.1c is an illustration showing a system according to an embodiment;
Fig.2 is an illustration showing a system according to an embodiment;
Fig.3 is an illustration showing a system according to an embodiment;
Fig.4a shows the result of a simulation according to an embodiment;
Fig.4b shows the result of a simulation according to an embodiment; and

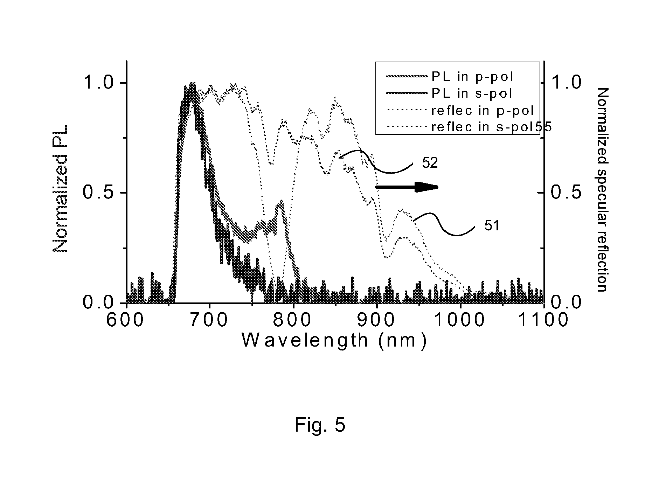

Fig.5 shows the result of a set of experiments according to an embodiment.

### Description of embodiments

Several embodiments of the present invention will be described in more detail below with reference to the accompanying drawings in order for those skilled in the art to be able to carry out the invention. The invention may, however, be embodied in many different forms and should not be construed as limited to the embodiments set forth herein. Rather, these embodiments are provided so that this disclosure will be thorough and complete, and will fully convey the scope of the invention to those skilled in the art. The embodiments do not limit the invention, but the invention is only limited by the appended patent claims. Furthermore, the terminology used in the detailed description of the particular embodiments illustrated in the accompanying drawings is not intended to be limiting of the invention.

The following description focuses on embodiments of the present invention applicable to the field of biosensors and in particular to a grating-coupled plasmon biosensor using luminescence or Raman-scattering.

The sensor according to some embodiments is configured to detect electromagnetic inelastic scattering, which pertains to a physical interaction between an electromagnetic wave, such as light or plasmons, and particles, e.g. luminescent or Raman-active molecules, that involves a change in the momentum and the energy of the wave.

Throughout this specification terms such as "excitation" by light and "emission" of light by the luminescent or Raman-active molecules are used. A person skilled in the art will appreciate that with "excitation" and "emission" of Raman-active molecules we refer to the Raman-scattering process, even though this terminology in a strict sense may be considered as inaccurate in the case of Raman-scattering, since the Raman "excited" state is virtual.

A problem solved by some embodiments of the present invention is how to design a device for surface plasmon biosensing with luminescence or Raman-active labelling, e.g. fluorescence labelling, that is suitable for cheap and simple incorporation in existing standard optical imaging system such as microscopes.

A solution to the problem is to design the metal film such that the excitation and fluorescence emission propagates via one objective that is perpendicular to the substrate.

The present invention discloses a novel concept for real-time, high-sensitivity optical biosensing that is suitable for cheap and simple incorporation in existing standard microscopes, and other similar apparatuses.

The present invention according to some embodiments utilizes surface plasmon polaritons (SPPs) on metal, such as gold, structured surfaces to localize the excitation and/or detection volume in an optical biosensor to a range <500nm above the substrate surface. Moreover, a main idea of the present invention according to some embodiments is that the both the excitation and detection are performed on the substrate side. An advantage of this design is that the excitation and the emission light do not have to pass through the biological sample. Moreover, the structure of the metal layer is designed such that both the excitation and the emission light path travel nearly perpendicular to the metal film. As such, the excitation and the fluorescence emission may propagate via one objective that is oriented perpendicular to the substrate surface.

The term "objective" used throughout this specification is to be meant a broad generic term for a lens, a set of lenses, a mirror, a set of mirrors, a microscope objective, a set of objectives, or any other optical component that could be used to direct or limit the amount of light that is incident on the objective.

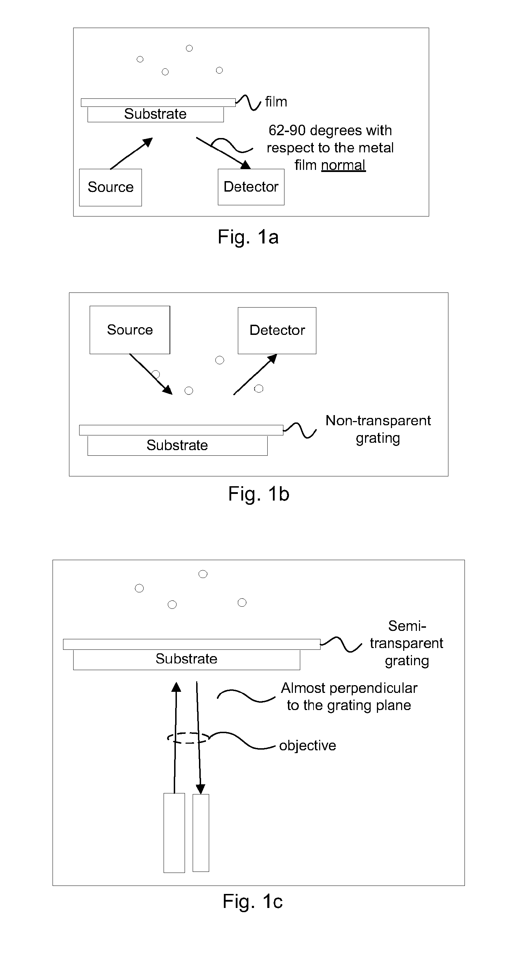

Fig. 1 illustrates a comparison of common SPR systems (Fig. 1a to 1b) and a system according to an embodiment (Fig. 1c). Fig 1a illustrates a system in which both the source and detector are located on the substrate side, while Fig. 1b comprises a source and detector being located on the solution side. As may be observed in Fig. 1c the propagation angle of the excitation and emission light is almost perpendicular to the grating plane, while the excitation and emission light in Fig. 1a make a large angle of approximately 62 to 90 degrees with respect to the metal film normal.

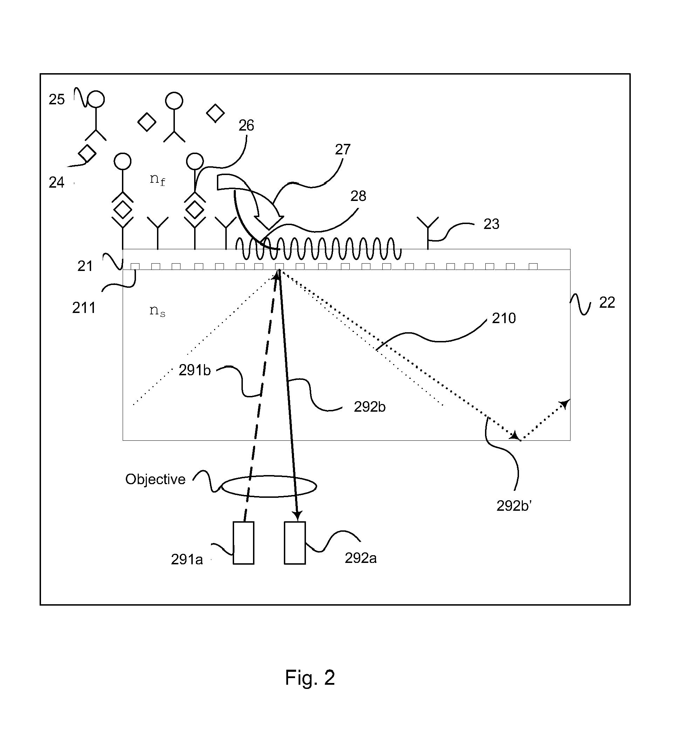

In a first embodiment, according to Fig. 2, and electromagnetic inelastic scattering sensor is provided. The sensor comprises a conductive layer, such as a thin metal layer 21 comprising gold or silver that supports SPP modes. The thin metal layer is placed onto a transparent substrate 22, such as glass, having refractive index nₛ. The thin metal layer comprises a grating structure 211. The bottom of the transparent substrate, i.e. the glass/air interface, is plane-parallel to the top, on which the grating, such as a metal grating, is placed.

The metal surface is functionalized on the side opposite to the transparent substrate. We define functionalized in the following way: a layer comprising functional molecules 23 is disposed on the metal layer. In this example, the functional molecules comprise nucleic acid molecules or polypeptide molecules, or a combination thereof. The functional molecules comprise one or more types of luminescent or Raman active particles and/or they act as capture probes, meaning that they are capable of binding analyte molecules comprising one or more types of luminescent or Raman active particles. It is advantageous for the functional molecules to position the luminescent or Raman-active particles (e.g. by binding them) within about 5 to 500 nm of the metal layer. It can also be beneficial for the functional molecules to position the luminescent or Raman-active particles within about 20 to 200 nm of the metal layer.

The capture probes are capable of binding luminescent or Raman active particles, either directly or indirectly, which goes as follows. A fluid with a refractive index n_{f} may be added containing the target molecules 24. The target molecules will selectively bind to the capture sites 23. The target molecules may be labelled directly, such as often applied in the case of DNA, or, as in Fig. 2, a second labelled moiety 25 is used to form a complex 26. Accordingly, the binding to the capture moieties 23 may occur using both direct binding, i.e. using only target molecules, or indirect binding, i.e. using the target molecules and the second labelled moiety 25.

If the luminescent or Raman active particles, such as fluorescent labels, are excited in some way, those labels that are near the surface, such as within <∼500 nm, will couple, i.e. transfer, part, or all, of their energy 27 into the surface plasmon modes 28. The plasmons that are present at the fluid-metal interface are confined there and will radiatively lose some of their energy into the substrate. The sensor further comprises a light source 291a, which is located on the substrate side of the sample and is configured to emit incident light 291b with predetermined frequency and angle.

There are two possible ways for excitation of the fluorescent labels, which are also referred to as fluorophores, fluorescent molecules or dye molecules.

In some embodiments the target molecule may either be directly labelled with a luminescent or Raman active compound or indirectly labelled by binding to a second luminescently labelled moiety (25) or Raman labelled moiety (25). The Raman active compound will emit Raman scattering radiation when excited. The Raman scattering radiation may couple a part of its energy to the surface plasmons.

In a preferred embodiment, the excitation is done resonantly via the surface plasmons. The incident light 291b must have a certain predetermined angle of incidence to be able to couple energy into the surface plasmons. The surface plasmons then excite the fluorescent labels that are close to the surface. In this way one could say that the excitation volume is limited using this approach.

In other embodiments, the fluorescent labels are excited independently of the angle of incidence. The incident light is partially transmitted through the semi-transparent thin metal film. In the case of a film of 50 nm gold, the transmission is around 10%, but can be more or less. The transmitted light enters the biological fluid and may excite fluorescent labels on the metal surface and in the bulk. One could say that the excitation volume is not limited using this approach.

Once the luminescent or Raman scattering particles have been excited at least a part of the energy 27 of the excited luminescent or Raman active particles is transferred into a plasmon mode 28 of said surface, resulting in emitting electromagnetic inelastic scattering light 292b, 33, such as fluorescence light, from said plasmon mode 28 into said substrate.

Moreover, a detector 292a for detecting the emitted fluorescence light 292b of the excited label is located on the substrate side of the sample. Should the grating structure not be adequately designed, or be absent as in prior art solutions, the fluorescence emission in this case, indicated by 292b', may be entirely emitted beyond the critical angle 210 of the glass/air interface. If this light passes the substrate and reaches the glass/air interface, it is totally internally reflected there and does not exit the glass substrate. Detecting the light on the substrate side is thus not directly possible, as in the case for WO2005/003745, and accordingly additional optical components, such as prisms, have to be used in order to allow the light to escape the substrate.

However, in the sensor according to the first embodiment of the invention, by tailoring the grating structure 211 it is possible to couple the excitation light 291b to first plasmon mode, i.e. the surface plasmons are resonantly used to excite the fluorescently labelled complexes or fluorescently labelled target molecules, and use a second mode to couple part, or all, of the energy of the fluorescently labelled complexes or fluorescently labelled target molecules on the surface into surface plasmons.

This second plasmon mode may then radiatively emit 292b under a specific angle as illustrated in Fig. 2. The excitation maximum and the emission maximum of the fluorophores differ in wavelength, by approximately 50 nm. Accordingly, for the excitation method using the surface plasmons, the plasmons that are used for excitation of the fluorophores are different from the plasmons to which the fluorophores couple-out their energy. The plasmons differ in their energy and momentum. Both types of plasmons may exist simultaneously on the same metal surface. More detailed, the two "types of plasmons" may be two different points in the dispersion relation of one surface plasmon mode. The advantage of this embodiment is that, apart from the localized detection volume, also the excitation volume is limited.

Accordingly, by adding and tailoring, i.e. designing a grating, one can change the angle(s) where coupling between the plasmon and freely propagating light mode occurs and thus the angle(s) where maximum plasmon (excitation and) emission occur. Typical grating parameters that may be designed are the grating period, duty cycle, depth, profile (e.g. binary, sinusoidal, blazed) and pattern (e.g. linear, squared). The structure of the grating is designed such that both the excitation and the emission light path travel nearly perpendicular to the metal film. As such, the excitation and the fluorescence emission may propagate via one objective that is oriented substantially perpendicular to the substrate surface.

By substantially perpendicular to the substrate surface is herein meant approximately 90°, e.g. such as 90° ± 5°, 90° ± 10°, etc.

Accordingly, the sensor according to some embodiments may be used for discrimination between bound labels, such as labelled complexes or target molecules, and unbound labels, such as unbound labelled moieties, based on the fact that only complexes that are near to the surface will be able to couple to the surface plasmon due to the localized field associated with plasmon modes.

### Metal layer

On a smooth metal layer, the fluorescence emission via plasmons occurs in a well-defined angle, such as ∼71° for a fluorophore emitting at a maximum of 680 nm via plasmons on a water-gold interface. The emission angle is such that, in the case of a parallel-surface substrate, the emission light is totally internally reflected on the substrate/air interface. As a result, the fluorescence emission is captured in the glass and cannot be collected by an objective in air (NA<1).

In the sensor according to some embodiments, the grating structure in the metal layer partly solves this problem, because it spreads the fluorescence emission light over several grating orders, each with a different outcoupling angle. Preferably, the light that has one (or minus one) grating k-vector added is directed such that it may propagate from the substrate into air and may be detected. However, a considerable part of the fluorescence emission is still emitted without help of the grating. It thus undergoes total internal reflection and is lost.

In some embodiments the designed metal layer is a semi-transparent metal grating covering the substrate. The semi-transparent metal grating is configured such that both the excitation and the emission light are directed nearly perpendicular to the plane of the grating. In this way both the excitation and the emission light may be directed to be within the numerical aperture of an objective, such as a lens.

One of the main advantages of using a grating, such as a semi-transparent grating, is that it becomes possible to couple excitation light to the plasmon for angles that are no longer beyond the critical angle of the substrate, such as glass/air interface. Moreover, gratings negate the use of prisms that are bulky and complicate the manufacturing of the device and simplify the excitation scheme.

In an embodiment the metal layer comprises a gold or silver structured surface.

The structure of the metal layer may comprise different designs. In the case of a linear grating, a proper choice of the grating period is important for avoiding that the incident light 291b is totally internally reflected at the substrate 22 environment (typically water) interface. For example, typically the surface plasmon mode at a metal/dielectric interface has an effective mode index n_{eff} slightly above the index of the dielectric medium that covers the metal, e.g., water which has an index of 1.33. As an example, assuming a flat substrate 22 and that the radiation 291b is coupled out into an air environment (nₑₙᵥ=1), a lower and upper limit for the grating period may be determined from: (*n_{eff}-nₑₙᵥ*)<λ*m*/Λ<(*n_{eff}*+*nₑₙᵥ*), where *m* is the diffraction order and λ is the wavelength of the fluorescent radiation. The wavelength λ is preferably in the optical range (300-900 nm). For a wavelength of 700 nm, and first order diffraction, i.e. m=1, a surface plasmon with n_{eff}=1.33, and coupling of the radiation 291b into air (nₑₙᵥ=1) this results in grating periods between 300 and 2100 nm. The grating depth is preferably larger than 5 nm, for an efficient light-plasmon coupling, and smaller than ½λ, i.e. less than ∼200 nm, because of fabrication issues in the case of high aspect ratios of the grating structure.

The SPR film is preferably fabricated of gold or silver, because of the low absorption in these metals. There is an optimum thickness for the SPR film: for Au the film is preferably between 40 and 60 nm, more preferably 50 nm, for Ag the optimum thickness is preferably between 50 and 65 nm, more preferably 60 nm.

By designing the metal layer such that the excitation light and the fluorescence emission light propagate through the same objective, it is also possible for the reflection to propagate through the same objective. In an embodiment a combination of a dichroic mirror and a beamsplitter is provided to separate the fluorescence, excitation beam, and the reflection beam from one another and use the specular reflection to search for the optimum plasmon excitation angle.

For any reflecting surface, the angle of incidence equals the angle of reflection. If the grating is designed such that the angle of incidence is small with respect to the surface normal, then the angle of reflection is equally small. That means that if the incident beam goes via the objective, then the reflected beam will also return via the objective.

In some embodiments the specular reflection is used to calibrate the optimum angle of incidence for coupling to surface plasmons. By changing the angle of incidence of the light, and for each angle measuring the intensity of the specularly reflected light, a minimum in the reflected intensity indicates the optimum angle of incidence for coupling to surface plasmons, since light is absorbed by the plasmon mode.

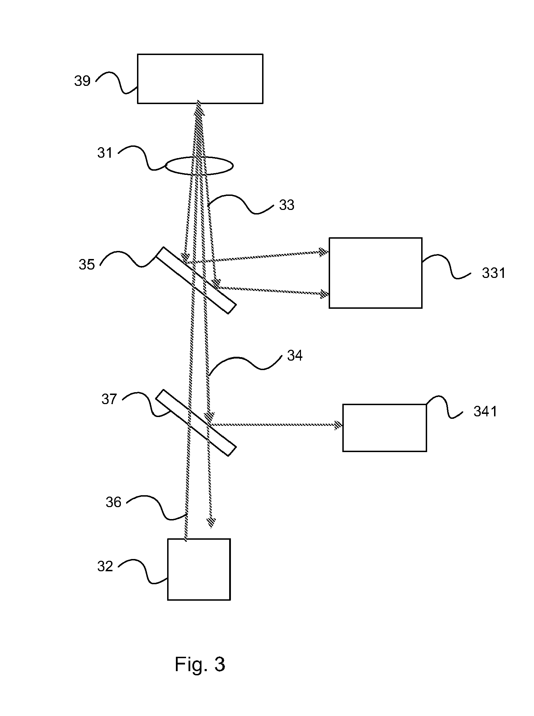

Fig. 3 illustrates a measurement setup, according to an embodiment, in which the reflected intensity may be measured. All light paths towards and from the sample 39 pass through the same objective 31. Behind the objective 31 are the light source 32, a detector 331 for the emitted fluorescence light 33 and a detector 341 for the specularly reflected light 34. In another embodiment the fluorescence and reflection light is measured with only one detector, e.g. using a spectrometer or proper filters. A dichroic mirror 35 in the beam path can separate the fluorescence light 33 from the reflected light 34, since they differ in wavelength. The incident light 36 and the reflected light 34 have the same wavelength and cannot be separated with a dichroic mirror. A beam splitter 37 may therefore be used to direct the reflected light to the detector 341.

It should be appreciated that the numerical aperture of the objective determines how closely the excitation and detection light paths must approach the normal of the metal layer plane.

In some embodiments, due to the tailoring of the grating structure, the required numerical aperture of the objective is <1, such as <0,6. This enables the present invention according to some embodiments to be incorporated into commonly known apparatuses, such as microscopes or systems including biosensors.

### Substrate

In some embodiments a simple and cheap microscope slide may act as the substrate for the SPR sensor. This has the potential of being a cheap and flexible solution for bringing the electromagnetic inelastic scattering sensor according to some embodiments to the market.

In some embodiments the substrate is glass.

In some embodiments the substrate may be polymeric, which can be easily fabricated into the desired grating structure by injection moulding.

### Fluid/sample

In some embodiment a luminescent particle is used having a fairly low intrinsic quantum efficiency. Due to a low radiative transition rate the difference between the signal generated in the bulk fluid and the surface may be further increased. When the luminescent molecule, for example a fluorophore, may couple to the plasmon modes new decay channels open up which will result in a shortening of the excited state lifetime and, when the energy coupled to the plasmons is recovered, to increased effective quantum efficiency. Those fluorophores that are far away from the surface will not show this enhancement and will thus be detected less efficiently.

Often the spectral width of the plasmon modes is smaller than that of the fluorophore particle used; this means that in the emission only in a limited spectral region has been enhanced through the metal grating. By comparing the fluorescence spectra of the free fluorophore in the bulk and the fluorophore near the surface, large spectral changes may be expected. In those cases it is advantageous to select those spectral components were the relative contribution of the fluorophores near the surface is largest.

### Light source

By employing time resolved fluorescence spectroscopy (TRFS), where a short laser pulse is used to excite the fluorescent molecules and the arrival time of the collected photons is recorded, it is possible to directly measure the excited state lifetime. The effect described in the previous paragraph results in a shortened excited state lifetime. This effect may be directly detected with TRFS and may be used to further discriminate between signal generated by bound labels and that resulting from the bulk.

### Simulation results

### Fluorescence collection efficiency

As mentioned above, two elements that determine the minimum target concentration that may still be detected are the detection sensitivity and the presence of background signals. The detection sensitivity depends on the efficiency of detecting the fluorescence emission of the luminophore. In this section the results from simulations concerning the fluorescence collection efficiency are presented.

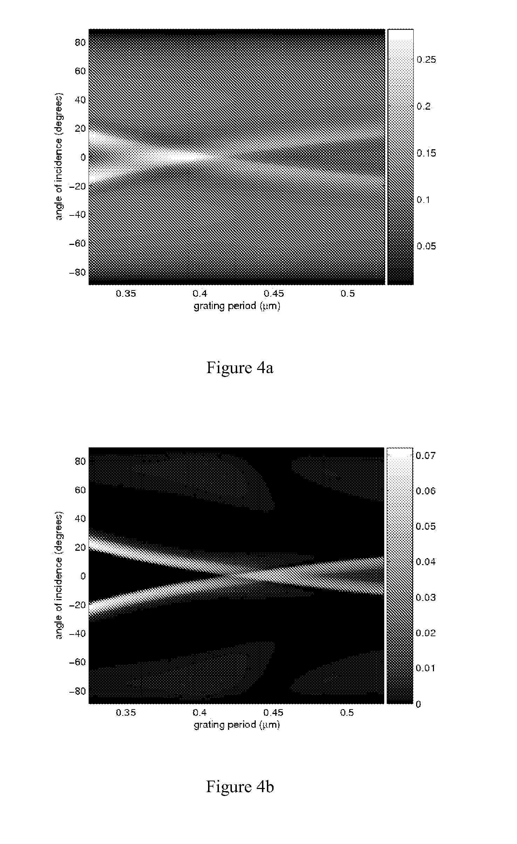

In order to estimate the ratio between the light that is coupled out of the glass and the light that is lost by total internal reflection, the present inventors have performed simulations simulating the emission of plasmon energy by a grating into different orders into glass. Fig. 4 illustrates the result of simulations on an Au grating.

The simulation concerns a 50-nm-thick Au layer with a linear sinusoidal grating (corrugation depth 50 nm) that has a varying period (horizontal axis in Fig. 4a and 4b). One side of the grating is filled with water, n = 1.33 representing the biological liquid. On the other side of the grating is the substrate, made of BK7 glass, n = 1.51. The incident light has a wavelength (in vacuum) of 633 nm, and its angle of incidence is the other varying parameter in the simulations (vertical axis in Fig. 4a and 4b). Since only the out-coupling of the plasmon mode is studied, it is unimportant how the plasmon is excited. In the simulations the excitation is performed from the fluid or sample side, so that high intensity reflections do not mask the lower intensity plasmon emission into the glass. Fig. 4a illustrates the zeroth order transmission into glass, which includes the grating-assisted plasmon emission. Fig. 4b illustrates the first order transmission into glass, corresponding to the direct emission of the plasmon, i.e. not assisted by the periodic grating structure. In both figures the light emission intensity is normalized to the total light intensity that is incident onto the grating; the range of intensities is indicated from black to white in a gray scale level for low to high intensity, respectively.

Fig. 4b shows the first order transmission of the grating. The incident light is partly coupled into the plasmon via the first order of the grating, and consecutively, the plasmon energy is coupled out without help from the grating. The plasmon out-coupling shows an optimum of approximately 6 % at normal incidence, with a grating period of ∼430 nm. For the same angle and period, the zeroth order transmission shown in Fig. 4a is approximately 10 %, of which ∼3 % is direct transmission, i.e. not assisted by plasmons, through the semi-transparant Au layer. Consequently, the remaining fraction of ∼7 % is out-coupling of plasmon energy that is assisted by the grating. It should be appreciated that the optimum in the zeroth order transmission is found at different parameters, which is due to a different plasmon mode that is not of relevance for the object of the performed simulation.

The ratio between grating assisted plasmon out-coupling, e.g. ∼7 %, and non-assisted out-coupling, e.g. ∼6 %, is approximately 1, which means that approximately 50 % of the plasmon energy that is coupled into the glass will actually be able to propagate from the glass into air and be detected with an objective. The rest of the light undergoes total internal reflection and cannot leave the glass. It may thus be concluded that this fraction of detectable light is suitable for the sensor according to some embodiments, and this conclusion supports the feasibility of the present invention.

Applications and use of the above described embodiments are various and include exemplary fields such as sensing, both in-vitro-diagnostics (IVD) as well as air quality and food safety. The sensor according to some embodiments is of value in those situations where the binding of fluorescently labelled molecules is to be detected in a large background. This is for instance the case in qPCR or DNA hybridization detection.

Although the present invention has been described above with reference to specific embodiments, it is not intended to be limited to the specific form set forth herein. Rather, the invention is limited only by the accompanying claims and, other embodiments than the specific above are equally possible within the scope of these appended claims.

In the claims, the term "comprises/comprising" does not exclude the presence of other elements or steps. Furthermore, although individually listed, a plurality of means, elements or method steps may be implemented by e.g. a single unit or processor. Additionally, although individual features may be included in different claims, these may possibly advantageously be combined, and the inclusion in different claims does not imply that a combination of features is not feasible and/or advantageous. In addition, singular references do not exclude a plurality. The terms "a", "an", "first", "second" etc do not preclude a plurality. Reference signs in the claims are provided merely as a clarifying example and shall not be construed as limiting the scope of the claims in any way.

## Claims

1. An electromagnetic inelastic scattering sensor based on surface plasmon-coupled emission comprising:
a conductive layer (21) positioned on a substrate (22), said conductive layer having a surface which faces away from said substrate and which is functionalized for binding luminescent or Raman active particles,
a light source provided on the substrate side of the sensor and configured to cause excitation of the luminescent or Raman active particles via an excitation light, wherein at least a part of the energy (27) of the excited luminescent or Raman active particles is transferred into a plasmon mode (28) of said surface, resulting in emitting electromagnetic inelastic scattering light (292b, 33) from said plasmon mode (28) into said substrate,
a detector (292a) configured to detect said electromagnetic inelastic scattering light (292b, 33) from the substrate side of the sensor,
wherein said conductive layer comprises a grating (211) being designed to control the propagation angle of both said excitation light and said electromagnetic inelastic scattering light (292b, 33), such that said angles are smaller than the numerical aperture of one objective being arranged substantially perpendicular to said functionalized surface.

2. The sensor according to claim 1, wherein the propagation angle of said excitation light and the propagation angle of the electromagnetic inelastic scattering light (292b, 33) is within the critical angle (210) of a substrate/air interface located at the substrate side.

3. The sensor according to any one of the preceding claims, wherein said grating is made of metal and is designed such that the required numerical aperture of the objective is <1, preferably <0,6.

4. The sensor according to any one of the preceding claims, wherein exciting said luminescent or Raman active particles is performed resonantly via surface plasmons located at the metal layer surface, and wherein at least a part of the energy in said excitation light, having a predetermined angle of incidence, is transferred to said surface plasmons, resulting in indirect excitation of said complex by said surface plasmons.

5. The sensor according to any one of the preceding claims, wherein the excitation or detection volume of said sensor ranges up to approximately 500 nm above the transparent substrate surface.

6. The sensor according to any one of the preceding claims, wherein said conductive layer is made of metal and comprises a gold or silver structured surface.

7. The sensor according to any one of the preceding claims, further comprising a dichroic mirror (35), and a beam splitter (37), for separating the electromagnetic inelastic scattering light (292b), excitation light (36), and the reflection light (34) corresponding to a part of the excitation light (36) reflected at the interface between the substrate and the conductive layer.

8. The sensor according to any one of the preceding claims, further comprising a detector (341) for detecting the reflection light (34).

9. The sensor according to any one of the preceding claims, wherein said propagation angle of said excitation light and of said electromagnetic inelastic scattering light is controlled by modification of at least one of the following metal grating parameters: grating period; duty cycle; grating depth; metal film thickness; cross-sectional grating profile (e.g. sinusoidal or binary); grating pattern (e.g. linear).

10. The sensor according to any one of the preceding claims, wherein said metal grating is configured to spread said electromagnetic inelastic scattering light over several grating orders, each with a different optical path direction angle.

11. The sensor according to any one of the preceding claims, wherein the lower and upper limit for the grating period of the metal grating may satisfy the equation: (*n_{eff}-nₑₙᵥ*)<λ*m*/Λ<(*n_{eff}*+*nₑₙᵥ*), where *m* is the diffraction order and λ is the wavelength of fluorescent radiation, nₑₙᵥ is the refractive index of the air environment surrounding the substrate, n_{eff} is the effective mode index of the surface plasmon mode at a metal/fluid interface that is slightly above the refractive index of the fluid n_{f}, wherein said metal grating is linear.

12. The sensor according to any one of the preceding claims, wherein said objective is a lens or an array of lenses.

13. The sensor according to any one of the preceding claims, wherein said substrate is made of glass, such as BK7 glass, or is polymeric.

14. The sensor according to any one of the preceding claims, wherein said substrate is a microscope slide.

15. A microscope comprising the sensor according to claim 1.

16. Use of the sensor according to any one of claims 1 to 14, in real-time, high-sensitivity optical biosensing.

17. Use of the sensor according to claim 1, in in-vitro-diagnostics, air quality, food safety, qPCR or DNA hybridization detection.
